# EUROPEAN PATENT APPLICATION

(11) **EP 2 023 009 A1**
(43) Date of publication of application: **11.02.2009**
(21) Application number: 07741996.8
(22) Date of filing: 19.04.2007
(51) Int. Cl.: F16H 1/16, B62D 5/04, F16H 55/24, F16H 57/02

(54) **REDUCTION GEAR AND ELECTRIC POWER STEERING DEVICE WITH THE SAME**

(30) Priority: 31.05.2006 JP 2006151743
(71) Applicant: NSK Ltd., Tokyo 141-8560 (JP)
(72) Inventor: SEGAWA, Toru c/o NSK, Ltd., Gunma 371-8528 (JP)
(74) Representative: Grünecker, Kinkeldey, Stockmair & Schwanhäusser Anwaltssozietät
(86) International application number: PCT/JP2007/058560
(87) International publication number: WO 2007/138803

(57) **Abstract**

A speed reducer having a holder which is easy to be attached to a housing and which suppresses teeth striking noise in a meshing portion, and an electric power steering apparatus having the speed reducer are provided. A holder 19 and a biasing member 20 are arranged in a bottom portion of a pocket-shaped end portion of a housing 11, and a coil spring 21 is wound between outer circumferences of the biasing member 20 and the holder 19. The holder 19 and an outer ring of a ball bearing 15 are attached to a stepped portion 11 a of the housing 11. A wave washer 17 and a retainer 16 are arranged on an outer side of the ball bearing 15 and are pressed in an axial direction so as to be fixed. A worm shaft is supported by inserting an axial end 12c of the worm shaft 12 in a hole 20a of the biasing member and inserting a small-diameter portion 12b of the worm shaft 12 in a bush 18 inside an inner ring of the ball bearing 15. The worm is elastically displacable due to the wave washer 17 and elastic deformations of the coil spring 21 and the bush 18. A preload is applied to a worm meshing portion so that the generation of teeth striking noise in the meshing portion is suppressed.

## Description

### TECHNICAL FIELD

The present invention relates to a speed reducer and an electric power steering apparatus having the same.

### BACKGROUND ART

Power steering apparatuses for reducing steering load on drivers are known in vehicle steering apparatuses. Conventionally, hydraulic power steering apparatuses have been widely used as power steering apparatuses. However, in accordance with the recent tendency of high efficiency of automobiles, hydraulic power steering apparatuses are being replaced with efficient electric power steering apparatuses (EPS) in many cases.

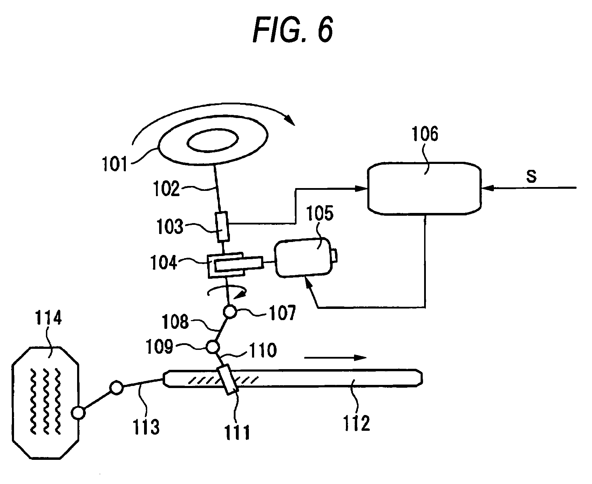

Fig. 6 is a diagram schematically illustrating an example of a basic configuration of such an EPS. A steering shaft 102 provided with a steering wheel 101 is coupled to an input shaft of a speed reducer 104, and an output shaft of the speed reducer 104 is coupled to a worm shaft 110 via a universal joint 107, an intermediate shaft 108 and another universal joint 109. A worm 111 formed on the worm shaft 110 is configured to mesh with a rack 112 so as to operate an orientation of a steered wheel 114 via a tie rod 113 which is coupled to an end portion of the rack 112.

A torque sensor 103 is provided on the steering shaft 102 to detect a steering torque generated in the shaft. Based on a signal representing the torque detected by the torque sensor 103 and a vehicle speed signal input from a not-shown vehicle speed sensor, a control unit 106 calculates an assist steering force to be supplied to a steering mechanism, i.e., a current command value which determines a magnitude of current to be supplied to a motor 105, and drives the motor 105 based on the calculated current command value.

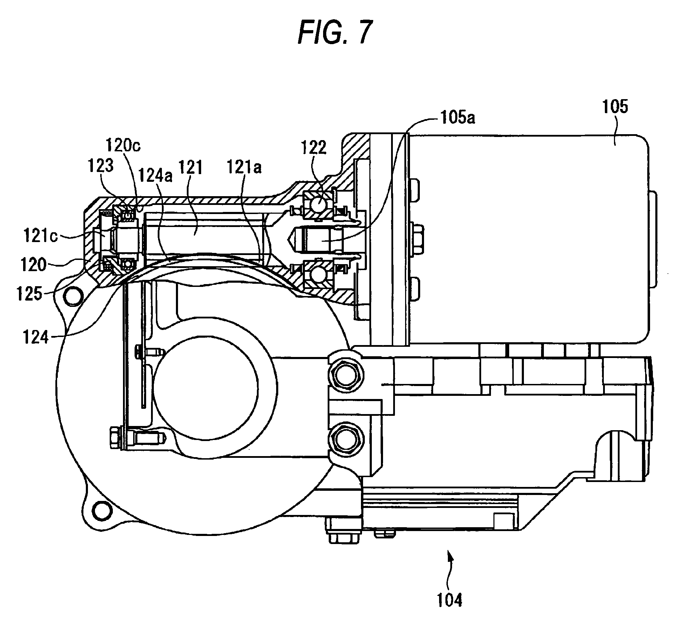

Fig. 7 is a front view illustrating an example of a configuration of the speed reducer 104, a portion of which being shown as a sectional view. The speed reducer 104 is a worm speed reducer. A worm 121, which is spline-coupled to a rotational shaft 105a of the motor 105, is rotatably held in a housing 120 with a ball bearing 122 and another ball bearing 123 which is held by a holder 125 which will be described later. Worm teeth 121a formed on a portion of the worm 121 mesh with worm wheel teeth 124a formed on a worm wheel 124 which is rotatably held by the housing 120.

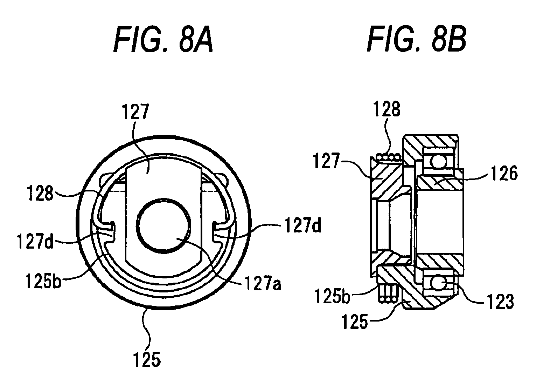

Fig. 8 is a diagram illustrating a detailed configuration of a portion including the holder 125 and the ball bearing 123, in which Fig. 8(a) is a front view seen from an axial end face of the worm 121, and Fig. 8(b) is a sectional view taken along an axial direction of the worm 121.

The holder 125 is attached onto an inner surface of a hole 120c (see Fig. 7) formed on a bottom surface of the housing 120. As is clear with reference to Fig. 8(b), an outer ring of the ball bearing 123 is fitted in the holder 125, while a resin-made annular bush 126 is fitted in an inner ring of the ball bearing 123, whereby an axial end portion of the worm 121 is supported via the bush 126.

A biasing member 127 having a hole 127a, into which an axial end 121c of the worm 121 is fitted, is disposed on an axially outer side (an opposite side to the worm 121) of the bush 126. A coil spring 128 is wound between a stepped portion 125b of the holder 125 and an outer face of the biasing member 127, and end portions of the coil spring 128 are engaged with engaging portions 127d formed on right and left side faces of the biasing member 127.

According to this configuration, in a state in which the axial end 121c of the worm 121 is fitted into the hole 127a of the biasing member 127, the worm teeth 121 a of the worm 121 are elastically biased towards the worm wheel teeth 124a of the worm wheel 124 due to elastic deformation of the coil spring 128, whereby a preload is applied to the meshing portion between the worm teeth 121a and the worm wheel teeth 124a to suppress a generation of teeth striking noise in the meshing portion (see Patent Document 1).
Patent Document 1: JP 2005-042913 A

### DISCLOSURE OF THE INVENTION

### PROBLEMS TO BE SOLVED BY THE INVENTION

The holder having the configuration described above is effective in suppressing the teeth striking noise in the meshing portion of the worm speed reducer. However, working efficiency is poor since the holder needs to be attached into the pocket-like hole on the bottom surface of the housing, and besides, assembling process is complicated, such as fixing the outer ring of the ball bearing to the holder by clamping, so that a manufacturing cost becomes high as the number of working process increases. It is an object of the present invention to provide a speed reducer and an electric power steering apparatus having the same which addresses thee problems described above.

### MEANS FOR SOLVING THE PROBLEMS

The present invention solves the problems described above, and according to the invention of claim 1, a speed reducer includes a worm and a worm wheel, wherein a worm shaft is elastically preloaded in a meshing direction. The speed reducer is characterized in that it further includes a biasing member having a fitting portion which is fitted on an axial end portion of the worm shaft arranged inside a housing, and a holder which supports the biasing member with a spring such that the basing member is movable in the meshing direction of the worm and the worm wheel. The worm shaft is supported inside the housing via a bearing which is arranged in series with the holder in an axial direction, and the holder and the bearing are biased in the axial direction by an elastic member and are positioned on a stepped portion formed on an interior of the housing.

The holder includes a protruded portion extending in the axial direction, and the housing includes a recessed portion into which the protruded portion is fitted. The fitting of the protruded portion of the holder into the recessed portion of the housing determines a phase of the worm shaft around the axial direction and restricts a rotation of the holder.

The speed reducer further includes an annular fixing member which compresses and holds, inside the housing, the elastic member which biases the holder and the bearing in the axial direction inside the housing.

The fixing member includes a fixed portion along a circumferential edge thereof which is brought into pressure contact with the interior of the housing so as to be fixed thereto, and an elastic piece which biases the elastic member in the axial direction.

According to the invention of claim 5, an electric power steering apparatus includes the speed reducer according to any of claims 1 to 4.

### ADVANTAGES OF THE INVENTION

As described above, the speed reducer according to the invention of claim 1 includes a worm and a worm wheel, wherein a worm shaft is elastically preloaded in a meshing direction. The speed reducer is characterized in that it further includes a biasing member having a fitting portion which is fitted on an axial end portion of the worm shaft arranged inside a housing, and a holder which supports the biasing member with a spring such that the basing member is movable in the meshing direction of the worm and the worm wheel. The worm shaft is supported inside the housing via a bearing which is arranged in series with the holder in an axial direction, and the holder and the bearing are biased in the axial direction by an elastic member and are positioned on a stepped portion formed on an interior of the housing.

Accordingly, the bearing and the holder can easily be attached in the pocket-like hole on the bottom surface of the housing, whereby the assembling process is simplified, and the teeth striking noise in the meshing portion of the worm speed reducer can be suppressed without increasing manufacturing cost.

In addition, the electric power steering apparatus according to the invention of claim 5 includes the speed reducer according to any of inventions of claims 1 to 4. Therefore, similar advantages as those in the invention of claims 1 to 4 can be obtained.

### BRIEF DESCRIPTION OF THE DRAWINGS

Fig. 1 is a sectional view illustrating a detailed supporting structure of an axial end portion of a worm shaft of a speed reducer.
Fig. 2 illustrates components of the supporting structure of the axial end portion of the worm shaft shown in Fig. 1.
Fig. 3 is a front view of a holder and a biasing member when seen in a direction from the axial end portion.
Fig. 4 is an external view of the holder.
Fig. 5 is an external view of an annular wave washer (an elastic member).
Fig. 6 is a diagram schematically illustrating an example of a basic configuration of a conventional EPS.
Fig. 7 is a front view illustrating an example of a configuration of a conventional speed reducer.
Fig. 8 illustrates in detail a configuration of a portion, including a holder and a bearing, of the conventional speed reducer.

### EXPLANATION OF REFERENCE NUMERALS

- 11: housing
- 11a: stepped portion
- 11c: recessed portion
- 12: worm shaft
- 12b: small-diameter portion
- 12c: axial end
- 15: ball bearing
- 16: retainer
- 16a: outer circumferential face (outer circumferential face of retainer)
- 16b: elastic piece (elastic piece of retainer)
- 17: wave washer (elastic member)
- 18: bush
- 19: holder
- 19b: groove
- 19c: protruded portion
- 19d: engaging portion
- 20: biasing member
- 20a: hole
- 21: coil spring

### BEST MODE FOR CARRYING OUT THE INVENTION

Hereinafter, a speed reducer according to an embodiment of the present invention and an electric power steering apparatus having the speed reducer will be described. An overall configuration of the electric power steering apparatus is similar to the configuration of the conventional electric power steering apparatus which is previously described with reference to Fig. 6, and the configuration of the speed reducer of the electric power steering apparatus is similar to the conventional configuration which is previously described with reference to Fig. 7, except that a supporting structure of an axial end portion of a worm shaft of the speed reducer is different. Therefore, in the following description, explanation of the overall configuration of the electric power steering apparatus and the overall configuration of the speed reducer will be omitted, and the supporting structure of the axial end portion of the worm shaft of the speed reducer, which constitutes a characterizing portion of the present invention, will be described.

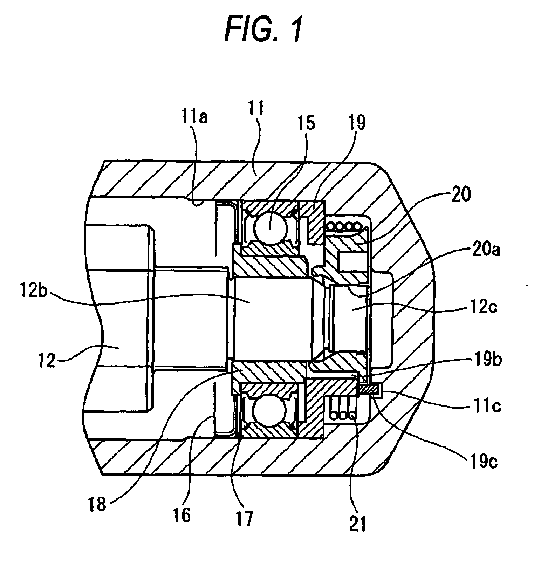

Fig. 1 is a sectional view illustrating a detailed supporting structure of the axial end portion of the worm shaft of the speed reducer, and corresponds to the supporting structure of the axial end portion of the worm shaft of the speed reducer which is previously described with reference to Fig. 7.

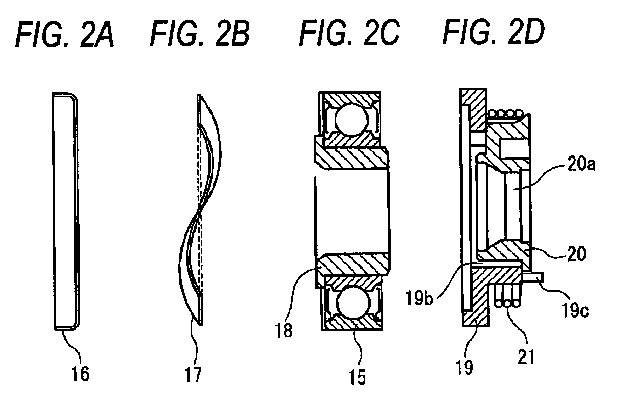

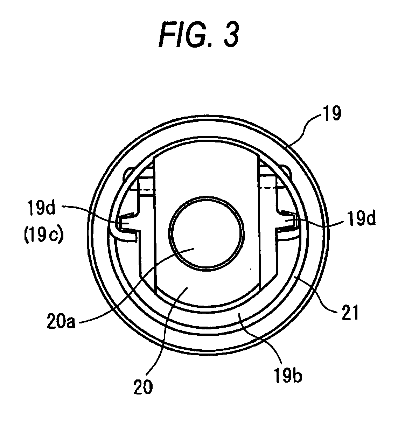

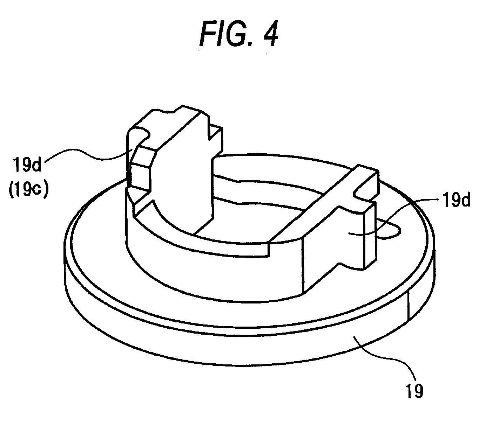

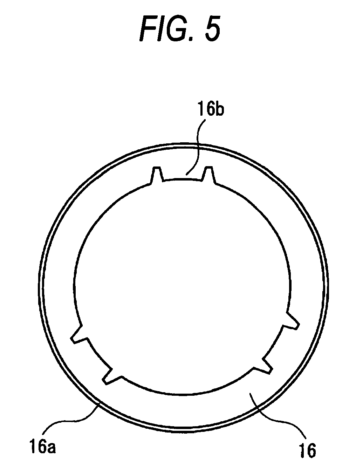

Fig. 2 illustrates components of the supporting structure of the axial end portion of the worm shaft shown in Fig. 1, in which Fig. 2(a) is a sectional view of a retainer 16 which is a fixing member, Fig. 2(b) is a sectional view of an annular wave washer 17 which is an elastic member, Fig. 2(c) is a sectional view of a ball bearing 15 which is a bearing to which a bush 18 is attached into a radially inner portion thereof, and Fig. 2(d) is a sectional view of a holder 19 and a biasing member 20. Further, Fig. 3 is a front view of the holder 19 and the biasing member 20 shown in Fig. 2(d) when seen in a direction from the axial end portion, Fig. 4 is an external view of the holder 19, and Fig. 5 is an external view of the annular wave washer 17.

With reference to Figs. 1 to 5, the supporting structure of the axial end portion of the worm shaft will be described. In Fig. 1, 11 denotes a housing, and 12 denotes the worm shaft, the axial end portion of which is shown therein. An end portion of the housing 11 is closed in a pocket-like manner, and the holder 19 and the biasing member 20, which will be described later, are disposed in a bottom portion thereof. Further, a stepped portion 11a is formed on an inside of the housing 11 near the end portion thereof, and an outer circumferential surface of an outer ring of the ball bearing 15 is securely fitted in the stepped portion 11a. A side face of the outer ring of the ball bearing 15 on a side of the axial end portion contacts the holder 19 which will be described later.

The annular bush 18, which is made of resin material and is elastically deformable, is fitted inside an inner ring of the ball bearing 15, and a small-diameter portion 12b of the worm shaft 12 is via the bush 18.

The substantially-annular holder 19 is disposed on an axially outer side (an opposite side from the worm shaft 12) of the ball bearing 15, and a side face of the holder 19 along an outer edge thereof is in contact with the side face of the outer ring of the ball bearing 15. An annular groove 19b is formed on an axially outer side (an opposite side from the worm shaft 12) of the holder 19, and a biasing member 20 having a hole 20a, into which an axial end 12c of the worm shaft 12 is fitted, is disposed on an inner side of the groove 19b. A coil spring 21, which is a spring member, is wound between an outer circumference of the biasing member 20 and an outer circumference of the holder 19, and end portions of the coil spring 21 are engaged with engaging portions 19d which are formed on right and left side faces of the holder 19.

Next, assembling of the components described above will be described. Firstly, as a preliminary work, the coil spring 21 is wound between the outer circumference of the biasing member 20 and the outer circumference of the holder 19. Next, the holder 19 and the biasing member 20, around which the coil spring 21 is wound, are disposed in the bottom portion of the end portion of the housing 11 which is closed in the pocket-like manner, and the holder 19 and the outer ring of the ball bearing 15, to which the bush 18 is attached, are attached to the stepped portion 11a of the housing 11.

Further, the annular wave washer 17 is disposed on an outer side (a worm side) of the outer ring of the ball bearing 15, and a retainer 16 is disposed on an outer side of the annular wave washer 17 and is pressed in the axial direction, whereby an outer circumferential face 16a of the retainer 16 is brought into press contact with an inner surface of the housing 11 so as to be fixed thereto. As shown in Fig. 5, the retainer 16 is formed with elastic pieces 16b, which are formed by providing a plurality of cuts along a circumferential direction, so that a slight axial movement of the ball bearing 15 is permitted.

Next, the worm shaft 12 is inserted. The axial end 12c of the worm shaft 12 is inserted into the hole 20a of the biasing member 20, and the small-diameter portion 12b of the worm shaft 12 is inserted into the bush 18 attached to the inner ring of the ball bearing 15 so as to be supported therein.

According to this configuration, in a state in which the axial end 12c of the worm shaft 12 is fitted in the hole 20a of the biasing member 20, worm teeth of the worm 12 are elastically biased and can be displaced towards worm wheel teeth of a worm wheel, due to elastic deformation of the coil spring 21 and elastic deformation of the bush 18. Further, because the wave washer 17 is disposed, the ball bearing 15 and the holder 19 are pressed in the axial direction without looseness. Therefore, a preload is applied to a meshing portion between the worm teeth and the worm wheel teeth, thereby making it possible to suppress the generation of teeth striking noise.

According to the configuration described above, even though the end portion of the housing 11 is formed in a pocket-like shape, the holder 19, the biasing member 20 and the ball bearing 15 can easily be attached inside the housing 11 to rotatably support the worm shaft 12 with the ball bearing 15.

In addition, the holder 19 is formed with a protruded portion 19c extending parallel to the axial direction, while the bottom surface of the end portion of the housing 11a is formed with a recessed portion 11 which corresponds to the protruded portion 19c, so that when the holder 19 is disposed on the bottom surface of the end portion of the housing 11, the protruded portion 19c of the holder 19 engages with the recessed portion 11c of the housing 11, wherein a phase (a rotational angle) of the holder 19 around the axial direction is determined and a rotation of the holder 19 is restricted. Thus, the assembling is facilitated.

The protruded portion 19c of the holder 19 can serve as one of the engaging portions 19d with which the end portions of the coil spring 21 engage. In this case, one of the engaging portions 19d is made to extend parallel to the axial direction to provide the protruded portion 19c (see Fig. 4). A position of an arm of the coil spring 21 (a position of one of the end portions of the coil spring) in the axial direction is determined in accordance with a direction in which it is wound, and is engaged with the protruded portion 19d. Since the protruded portion 19c of the holder 19 is engaged with the recessed portion 11c of the housing 11 and is buried therein, the coil spring 21 is prevented from dropping off due to a restriction from the housing 11.

The phase of the protruded portion 19c shown in Figs. 1 and 2 and the phase of the engaging portion 19d shown in Fig. 3, with which the end portion of the coil spring 21 is to be engaged, are shifted from each other. The phases are illustrated as being shifted from each other in order to illustrate, in the sectional view of Fig. 1, how the protruded portion 19c of the holder engages with recessed portion 11c.

The material of the holder may be synthetic resin or sintered metal. Further, the wave washer 17, which is the elastic member, is not limited to the wave washer 17, and rubber or a disc spring may be used.

While the speed reducer according to the present invention and the electric power steering apparatus having the speed reducer have been described heretofore, the speed reducer according to the present invention can of course be applied to speed reducers for general machineries other than the electric power steering apparatus.

The present application is based on Japanese Patent Application (No. 2006-151743) filed on May 31, 2006, the content of which is incorporated herein by reference.

### INDUSTRIAL APPLICABILITY

A speed reducer having a holder provided on an axial end of a worm shaft and an electric power steering apparatus having the speed reducer are provided. A configuration of the holder is effective in suppressing teeth striking noise in a meshing portion of the worm speed reducer and the holder can easily be attached to the housing.

## Claims

1. A speed reducer comprising a worm and a worm wheel, wherein a worm shaft is elastically preloaded in a meshing direction, **characterized in that** the speed reducer further comprises:
a biasing member comprising a fitting portion which is fitted on an axial end portion of the worm shaft arranged inside a housing; and
a holder which supports the biasing member with a spring such that the basing member is movable in the meshing direction of the worm and the worm wheel,
wherein the worm shaft is supported inside the housing via a bearing which is arranged in series with the holder in an axial direction, and
the holder and the bearing are biased in the axial direction by an elastic member and are positioned on a stepped portion formed on an interior of the housing.

2. The speed reducer according to claim 1, **characterized in that** the holder comprises a protruded portion extending in the axial direction, and the housing comprises a recessed portion into which the protruded portion is fitted, wherein the fitting of the protruded portion of the holder into the recessed portion of the housing determines a phase of the worm shaft around the axial direction and restricts a rotation of the holder.

3. The speed reducer according to claim 1 or 2, **characterized in that** the speed reducer further comprises an annular fixing member which compresses and holds, inside the housing, the elastic member which biases the holder and the bearing in the axial direction inside the housing.

4. The speed reducer according to claim 1, **characterized in that** the fixing member comprises a fixed portion along a circumferential edge thereof which is brought into pressure contact with the interior of the housing so as to be fixed thereto, and an elastic piece which biases the elastic member in the axial direction.

5. An electric power steering apparatus comprising the speed reducer according to any of claims 1 to 4.
